# EUROPEAN PATENT APPLICATION

(11) **EP 0 969 231 A2**
(43) Date of publication of application: **05.01.2000**
(21) Application number: 99303474.3
(22) Date of filing: 04.05.1999
(51) Int. Cl.: F16J 3/02

(54) **sealing membrane arrangements**

(30) Priority: 30.06.1998 GB 9814186
(71) Applicant: DRAFTEX INDUSTRIES LIMITED, Edinburgh EH2 3AP, Scotland (GB)
(72) Inventor: Drummel, Philippe, 44980 Sainte-Luce-sur-Loire (FR)
(74) Representative: Foster, David Martyn

(57) **Abstract**

A sealing membrane arrangement (34) is provided in a mounting arrangement (18) for a vehicle suspension system. A rigid boss (24) is carried by the upper end of the rod (12) of a shock absorber (10), and is resiliently connected to a rigid housing (20) by rubber mounts (28,30). The housing (20) is fixed to the body or chassis (16) of the vehicle. The sealing membrane arrangement (34) divides the interior of the housing (20) into upper and lower annular chambers (36,38) which are interconnected by means of a conduit (40) and filled with hydraulic fluid. Vertical relative vibrations of the rod (12) and the housing (20) cause fluid transfer between the two chambers (36,38) through the conduit (40) which damps the vibrations. The sealing membrane arrangement (34) comprises two convexo-concave shaped membranes (34A,34B) preferably made of rubber and reinforced with fibres. The convex shapes of the membranes (34A,34B) are directed inwardly of the respective chambers (36,38) so as better to resist the pressure therein. The hollow interior between the two membranes (34A,34B) may be filled with hydraulic fluid. The pressure of this hydraulic fluid may be externally adjusted.

## Description

The invention relates to a sealing membrane arrangement for flexibly sealing an aperture in a pressurisable chamber, comprising membrane means defining a hollow fluid-filled space, and attachment means for attaching a region on the outside of the membrane means to wall means defining the aperture whereby to close the aperture.

Such an arrangement is shown, for example, in US-A-4 024 770. In this arrangement, the aperture is annularly shaped and so is the membrane means and the hollow space therein. The annular aperture is positioned between concentric inner and outer cylindrical members. When the hollow space in the membrane means is pressurised, the membrane means has annularly spaced cylindrical walls extending in opposite directions away from the plane of the aperture, the cylindrical walls respectively terminating in convex portions of the membrane means. The cylindrical walls of the membrane means respectively make face to face contact with the annular walls of the cylindrical members and are of sufficient axial length to enable corresponding relative axial movement of the two cylindrical members. However, such an arrangement is not optimised for providing a seal for resisting pressure changes within the pressurisable chamber.

According to the invention, therefore, the sealing membrane arrangement as first set forth above is characterised in that the membrane means extends convexly away from the plane of the aperture into the chamber.

Sealing membrane arrangements embodying the invention, and incorporated in hydro-elastic vibration-damping arrangements for use in vehicles, will now be described, by way of example only, with reference to the accompanying diagrammatic drawings in which:
Figure 1 is a part cross-sectional view through a vehicle suspension arrangement showing a sealing membrane arrangement embodying the invention incorporated in a hydro-elastic support arrangement;
Figure 2 is an enlarged view of part of the sealing membrane arrangement of Figure 1;
Figure 3 shows a modification of the arrangement of Figure 1 which may be applied to an engine mount, in which the operation of the sealing membrane arrangement is controllable;
Figure 4 shows a modified configuration; and
Figure 5 shows a further modified configuration.

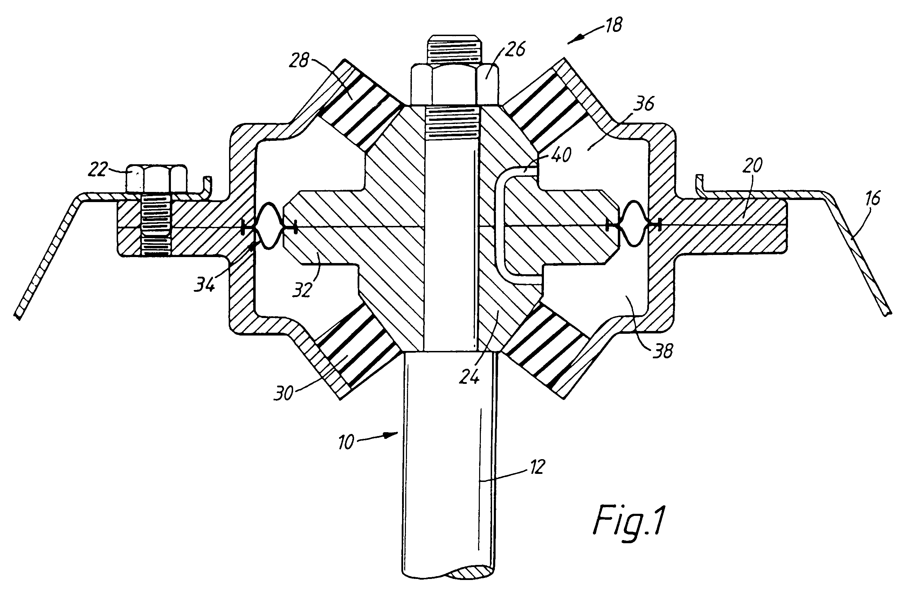

Figure 1 shows part of a telescopic shock absorber 10 having a rod 12 which is movable within the cylindrical body (not shown) of the shock absorber under control of damping arrangements within the shock absorber. The upper end of the rod 12 is attached to the body or chassis 16 of the vehicle by the movement-damping arrangement shown generally at 18 and to be described in more detail below. The cylindrical body of the shock absorber is attached to the wheel or axle of the vehicle (not shown).

The movement-damping arrangement 18 comprises a rigid housing 20 which is attached to the vehicle body 16 by means of bolts, of which one is shown at 22. A rigid boss 24 is secured to the upper end of the rod 12 by a nut 26. The boss 24 is attached to the housing 20 by means of upper and lower resilient rubber mounts 28,30. The periphery of a flange 32, which is an integral part of the boss 24, is sealingly attached to the inner periphery of the housing 20 by means of the sealing membrane arrangement to be described in more detail below and referenced 34. In this way, the interior of the housing 20 is divided into an annular upper chamber 36 and an annular lower chamber 38. Chambers 36 and 38 are interconnected though the flange 32 by a conduit 40. Chambers 36 and 38, and the conduit 40, are filled with hydraulic fluid.

In operation, the shock absorber 10 damps vertical movement of the body of the vehicle in the usual way. The movement-damping arrangement 18 resiliently attaches the upper end of the rod 12 to the vehicle body and damps vibrations of the rod 12 relative to the vehicle body. Thus, as the boss 24 moves downwardly in response to such a vibration, the pressure within chamber 38 will increase and the pressure within the upper chamber 36 will decrease. Fluid thus flows though conduit 40 from the lower chamber 38 to the upper chamber 36. Similarly, when the boss 24 moves in the opposite (downward) direction, in response to a vibration, the pressure in the upper chamber 36 increases and the pressure in the lower chamber 36 decreases. Fluid thus transfers from the upper chamber 36 to the lower chamber 38 through the conduit 40. The conduit 40 is dimensioned to resonate at a particular frequency which is selected according to the desired damping characteristics of the vehicle suspension, so as to provide optimum damping at that frequency.

The movement damping arrangement 18 is thus particularly effective in damping high frequency low amplitude vibrations caused by wheel-hopping or the like which, owing to friction in the shock absorber, may be directly transmitted through the shock absorber to the rod 12.

In order to produce correct and effective operation of the system, certain characteristics are required for the sealing membrane arrangement 34. In particular, it must be sufficiently flexible to axial, radial and conical displacements while exerting minimum reactive forces on the movable members. In addition, the membrane arrangement must not stretch, or must not stretch significantly, in response to pressure increase in either of the chambers 36,38, because, otherwise, this will reduce the pressure difference created between the two chambers by the vibrations and will reduce the effectiveness of the damping operations.

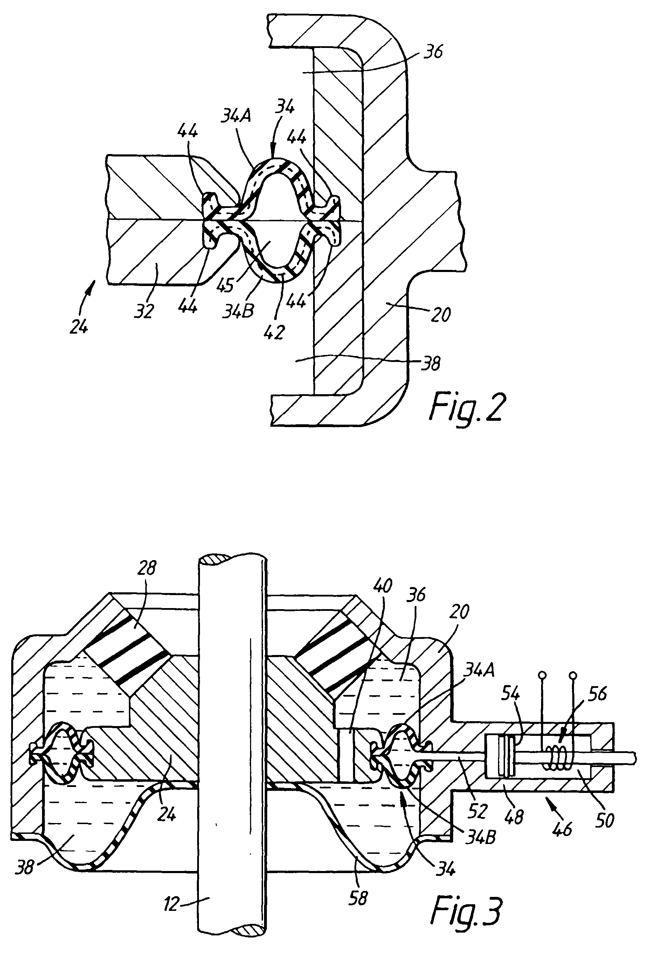

The sealing membrane arrangement 34 is therefore constituted by two separate flexible and elastic membranes 34A and 34B (shown most clearly in Figure 2). Advantageously, the membranes are made of rubber and are reinforced with textile or synthetic fibres 42. The membranes are fixed in position by means of integral tabs or flanges 44 which are resiliently secured within grooves in the flange 32 and the housing 20 respectively. The fibres 42 are preferably disposed in the general plane of the membrane in such a manner that they become stretched in traction when pressure is exerted on a face of either membrane.

Each membrane 34A,34B possesses a concavo-convex form, so that the concave sides of the two membranes face towards each other and the convex sides face into the respective chambers 36,38. The convex shapes strongly resist deformation of the membranes when they are subjected to pressure.

In addition, and to eliminate the risk of reversal of the shape of each membrane when subjected to pressure, the sealing membrane arrangement 34 includes hydraulic fluid filling the space 45 between the two membranes 34A and 34B. Because the fluid is incompressible, it transmits the pressure received by the convex side of each membrane to the concave side of the other membrane, as each chamber 36,38 is alternately pressurised.

The flexibility of the membrane arrangement 34 is achieved because of the form of the textile fibres reinforcing each membrane. The woven fibres produce a space between each fibre which allows the rubber of each membrane to deform during transverse displacements.

Figure 3 shows a modification, in which items corresponding to those in Figures 1 and 2 are similarly referenced. In the modification shown in Figure 3, the two relatively movable rigid members 20 and 24 are connected by the upper rubber mount 28 but not by the lower rubber mount 30. The upper annular chamber 36 is defined in the same way as in Figure 1. The lower annular chamber 38 in Figure 3 is defined by a flexible membrane 58. Chamber 38 thus acts as a compensation chamber. The arrangement shown in Figure 3 may be used as a vibration-damping engine mount in a motor vehicle.

In the arrangement of Figure 3, the pressure of the fluid enclosed between the two membranes 34A and 34B can be controlled by a pressure control arrangement 46. In this example, the pressure control arrangement 46 comprises a cylinder 48 having an interior 50 which is connected to the space between the membranes 34A,34B by a through passageway 52. The space 50 within the cylinder 48 includes a sealingly slidable piston 54 which can be moved to and fro to adjust the fluid pressure between the membranes by means of a solenoid arrangement shown at 56. In this way, the flexibility of the membrane arrangement 34 can be externally adjusted, thus varying the strength of the hydroelastic damping system. Clearly, the pressure control arrangement 46 does not need to take the form shown in Figure 3 but can take any other suitable form. Furthermore, the pressure control arrangement can be applied to a vehicle suspension arrangement instead of an engine mount.

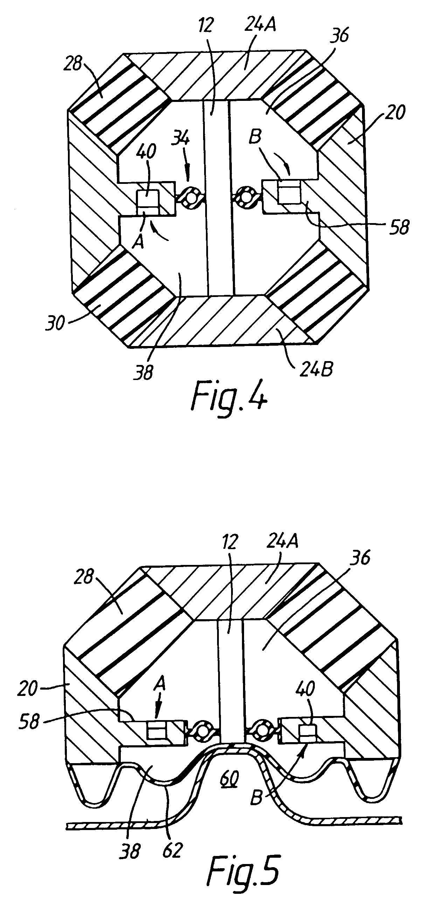

Figure 4 shows a modifed form of the Figure 1 configuration, in which the boss 24 is replaced by upper and lower rigid parts 24A and 24B. The housing 20 in this case has an inwardly directed annular flange 58, which is sealed to the external periphery of the rod 12 by means of an sealing membrane arrangement 34 which is similar to the sealing arrangements 34 shown in the other Figures. Again, therefore, upper and lower annular chambers 36 and 38 are formed. These chambers are interconnected by a generally helical conduit formed in the annular flange 58 and corresponding to the conduit 40 of the other Figures, one open end of this channel being shown at A and the other at B. The operation is generally as previously described.

Figure 5 shows a modified form of the arrangement of Figure 4. In this case, though, the damping arrangement 18 is for damping movement of a bump stop 60 which is in contact with the end of the rod 12 through a flexible membrane 62. Other parts shown in Figure 5 which correspond to parts in the other Figures are similarly referenced.

The sealing membrane arrangements 34 can of course be used in other configurations.

## Claims

1. A sealing membrane arrangement for flexibly sealing an aperture in a pressurisable chamber (36,38), comprising membrane means (34) defining a hollow fluid-filled space (45), and attachment means for attaching a region on the outside of the membrane means (34) to wall means (20,32;12,58) defining the aperture whereby to close the aperture, characterised in that the membrane means extends convexly away from the plane of the aperture into the chamber (36,38).

2. A sealing membrane arrangement according to claim 1, characterised in that the membrane means is made of elastomeric material.

3. A sealing membrane arrangement, characterised by embedded fibres (42) incorporated in the membrane means (34) and positioned to resist stretching of the membrane means (34) in response to increased pressure in the chamber (36,38).

4. A sealing membrane arrangement according to claim 1 or 2 for sealing between the said chamber (36) and a second pressurisable chamber (38), characterised in that the membrane means (34) extends convexly in opposite directions away from the plane of the aperture which is positioned between the two chambers (36,38).

5. A sealing membrane arrangement according to any preceding claim, characterised in that the membrane means comprises two concavo-convexly shaped membranes (34A,34) sealingly attached together to define the enclosed space.

6. A sealing membrane arrangement according to claim 5, characterised in that the two membranes (34A,34B) are sealingly attached together along the said region.

7. A sealing membrane arrangement according to any preceding claim, characterised by control means (46) for controllably adjusting the pressure of the fluid within the enclosed space.

8. A sealing membrane arrangement according to any preceding claim, characterised in that the aperture is an annular gap and the membrane means (34) extends annularly and the enclosed space is annular.

9. A sealing membrane arrangement according to any preceding claim, in combination with two relatively vibratable rigid members (20,24) connected together by resilient support means (28) which at least partly defines the or one of the chambers (36,38) so that that chamber (36,38) becomes alternately compressed and expanded by relative movement of the two rigid members (20,24).

10. A sealing membrane arrangement according to claim 3 in combination with two relatively vibratable rigid members (20,24) connected together by resilient support means (28) so that relative movement of the two rigid members (20,24) in one direction compresses one chamber (36) and expands the other (38) and relative movement of the two rigid members (20,24) in the opposite direction expands the one chamber (36) and compresses the other (38).

11. A sealing membrane arrangement according to claim 10, characterised by a conduit (40) of predetermined dimension interconnecting the two chambers (36,38) for controllably allowing transfer of the fluid between them.

12. A sealing membrane arrangement according to claim 10 or 11, characterised in that one (36) of the chambers is partly defined by the resilient support means (28).

13. A sealing membrane arrangement according to claim 11, characterised in that the other chamber (38) is also partly defined by the resilient support means (28).

14. A sealing membrane arrangement according to claim 12, characterised in that the other chamber (38) is partly defined by a flexible wall (58).

15. A sealing membrane arrangement according to any one of claims 9 to 14, characterised in that the two relatively vibratable members (20,24) are members in a motor vehicle.

16. An arrangement according to claim 15, characterised in that the two relatively vibratable members (20,24) are members in a vehicle suspension system.

17. A sealing membrane arrangement according to claim 14, characterised in that the two relatively vibratable members (20,24) are for respective connection to the engine of a motor vehicle and the body or chassis of the vehicle.
